# EUROPÄISCHE PATENTSCHRIFT

(11) **EP 1 587 209 B1**
(45) Veröffentlichungstag und Bekanntmachung des Hinweises auf die Patenterteilung: **05.12.2012**
(21) Anmeldenummer: 05007830.2
(22) Anmeldetag: 09.04.2005
(51) Int. Cl.: H02P 6/00, F04D 27/00

(54) **Hydraulikaggregat für einen Kraftschrauber**
Hydraulic unit for power wrench
Groupe hydraulique pour clé dynamomètrique

(30) Priorität: 17.04.2004 DE 202004006109 U
(43) Veröffentlichungstag der Anmeldung: 19.10.2005
(73) Patentinhaber: Wagner Vermögensverwaltungs-GmbH & Co. KG, 53804 Much (DE)
(72) Erfinder: Sittig, Ulf, 51588 Nümbrecht (DE); Andres, Günter, 53804 Much (DE); Thelen, Bernd, 53804 Much (DE); Wagner, Paul-Heinz, 53804 Much-Birrenbachshöhe (DE)
(74) Vertreter: von Kreisler Selting Werner

(56) Entgegenhaltungen:
- EP-A1- 0 509 724
- DE-A1- 19 920 563
- US-A1- 2003 206 805

## Beschreibung

Die Erfindung betrifft ein Hydraulikaggregat zur Lieferung von Öl an eine hydraulische Last erzeugenden Kraftschrauber, mit einem Öl enthaltenden Reservoir, einer Pumpe und einem die Pumpe treibenden elektrischen Motor, der ein Gehäuse aufweist, welches zugleich mindestens einen Teil des Reservoirs bildet, wobei der Rotor des Motors von Öl umspült ist.

Ein Hydraulikaggregat für einen Kraftschrauber weist als Druckerzeuger eine Pumpe auf, die Öl aus einem Reservoir ansaugt und einem Verbraucher zuführt. Von dem Verbraucher führt eine Rücklaufleitung zu dem Reservoir zurück. Bekannt sind Hydraulikaggregate, die den Motor als Tauchmotor enthalten, welcher in dem Reservoir angeordnet und in die Hydraulikflüssigkeit eingetaucht ist. Hierbei wird die im Motor entstehende Wärme durch das Hydrauliköl von dem Motor abgeführt. Wegen der ineinander angeordneten verschiedenen Gehäuse hat ein solches Aggregat ein hohes Gewicht und einen erheblichen Platzbedarf. Die Größe des Motors und somit des gesamten Gehäuses richtet sich nach der maximalen Last eines Verbrauchers, der von dem Hydraulikaggregat gespeist werden soll. Hat der Verbraucher einen hohen hydraulischen Widerstand, so ist ein entsprechend leistungsstarker Motor im Hydraulikaggregat erforderlich. Es gibt viele Fälle, in denen der Verbraucher normalerweise gegen eine relativ geringe Last arbeitet, in Einzelfällen aber eine hohe Spitzenlast überwinden muss. Die Motorleistung muss entsprechend der Spitzenlast bemessen sein. Daher sind viele Hydraulikaggregate für den Normalfall überdimensioniert. Sie haben große Abmessungen und ein hohes Gewicht. Dies ist besonders bei solchen Hydraulikaggregaten nachteilig, die von Hand getragen werden müssen, beispielsweise in der hydraulischen Verschraubungstechnik.

Der Oberbegriff des Patentanspruchs 1 geht aus von einem Hydraulikaggregat, das in US 2003/0206805 A1 beschrieben ist. Das Hydraulikaggregat weist ein Ölreservoir auf, das eine stirnförmige Pumpanordnung aus mehreren Hydraulikpumpen enthält. Die Hydraulikpumpen sind von einem Exzenter angetrieben, der auf einer Welle sitzt, welche von einem Elektromotor getrieben ist. Die Betriebsfrequenz des Elektromotors wird in Abhängigkeit von dem an einem Verbraucher gemessenen Druck verändert.

EP 0 509 724 A1 beschreibt eine Hydraulikpumpe, bei der das Reservoir in dem Gehäuse eines die Pumpe treibenden Motors integriert ist. Das Gehäuse hat längslaufende Rippen. An einigen dickeren Rippen sind Standfüße angeschraubt.

Der Erfindung liegt die Aufgabe zugrunde, ein Hydraulikaggregat zu schaffen, bei dem das Gehäuse eine Montageplatte und ein Befestigungsprofil aufweist, um das Gehäuse und die Motorsteuerung zu montieren.

Das Hydraulikaggregat nach der vorliegenden Erfindung ist durch den Anspruch 1 definiert. Es ist dadurch gekennzeichnet, dass das Gehäuse des Motors zugleich mindestens einen Teil des Reservoirs bildet, wobei der Motor von Öl umspült ist, und dass das Gehäuse an seiner Unterseite eine angeformte von Rippen freie Montageplatte aufweist und an seiner Oberseite ein Befestigungsprofil für die Motorsteuerung.

Mit dem erfindungsgemäßen Hydraulikaggregat wird bei geringer Last eine hohe Förderrate der Pumpe und bei hoher Last eine geringere Förderrate erreicht. Die Pumpleistung und damit die Motorleistung bleibt in allen Fällen im Wesentlichen konstant, so dass mit dem selben Hydraulikaggregat unterschiedliche Arbeitssituationen bewältigt werden können, wobei der Motor trotz unterschiedlicher Lasten in einem konstanten Leistungsbereich arbeitet. Zugleich werden thermische Überlastungen des Motors verhindert. Die Motorsteuerung enthält einen Frequenzumrichter, der die Betriebsfrequenz für den Motor liefert. Vorzugsweise verringert sich die Betriebsfrequenz linear mit einer Erhöhung der Last bzw. eines von der Last abhängigen Messwertes.

Zur Ermittlung der Last kann ein Drucksensor vorgesehen sein, der den Ausgangsdruck des Hydraulikaggregates misst. Der Ausgangsdruck ist abhängig von der Last des angeschlossenen Verbrauchers. Setzt der Verbraucher dem Hydrauliköl einen großen Widerstand entgegen, wird die Motordrehzahl verringert.

Eine andere lastabhängige Größe, die für die Motorsteuerung benutzt werden kann, ist die Stromaufnahme des Motors. Hierzu kann ein entsprechender Stromsensor am Hydraulikaggregat vorgesehen sein.

In der Motorsteuerung kann eine Kurve, Tabelle oder andere funktionale Abhängigkeit hinterlegt sein, die den Verlauf der Motordrehzahl in Abhängigkeit von dem lastabhängigen Messwert angibt. Entsprechend diesem Messwert wird die Motordrehzahl automatisch eingestellt.

Gemäß einer bevorzugten Ausgestaltung der Erfindung sind in dem Gehäuse Abstandhalter zur Positionierung der Motorwicklung mit radialem Abstand zu dem Gehäuse vorgesehen, derart, dass zwischen der Motorwicklung und dem Gehäuse ein zu dem Reservoir gehörender Freiraum gebildet ist. Das Motorgehäuse, das zugleich das Gehäuse des Hydraulikaggregats bildet, ist für den aus Stator und Rotor bestehenden Motor zu groß, so dass zwischen Gehäuse und Statorwicklung ein Zwischenraum existiert. Dieser bildet einen Teil des Reservoirvolumens. Der Zwischenraum ist durch die Abstandhalter überbrückt, welche die Statorwicklung positionieren. Es ist also nur ein einziges Gehäuse vorhanden, das zugleich das Motorgehäuse und das Reservoirgehäuse bildet. Rotor und Stator des Motors werden unmittelbar von dem Hydrauliköl umspült. Dadurch wird von dem Synchronmotor die Wärme besser abgeführt und der Motor wird mit höherer Leistung betrieben. Der Raum zwischen Stator und Gehäuse bildet einen wesentlichen Teil des Reservoirvolumens.

Die Herstellung des Hydraulikaggregats erfordert mit Ausnahme der Abstandhalter keine Konstruktion zusätzlicher Elemente. Es ist lediglich erforderlich, ein Motorgehäuse zu verwenden, das für den betreffenden Stator zu groß ist. Bei einer Baureihe von Motoren unterschiedlicher Größen wird die Größe des Motorgehäuses einfach zwei Nummern zu groß gewählt. In diesem Fall kann ein Standard-Motorgehäuse benutzt werden. Wegen des zu großen Motorgehäuses und der verbesserten Kühlung ist auch die erreichbare Motorleistung hoch.

Gemäß einer bevorzugten Weiterbildung der Erfindung weist das Gehäuse an seiner Außenseite Rippen auf, die in Achsrichtung des Motors verlaufen; an einem Ende des Gehäuses ist ein Lüfter vorgesehen, der einen Kühlluftstrom parallel zu den Rippen erzeugt. Der Lüfter kann direkt auf der Motorwelle sitzen oder über ein Getriebe von der Motorwelle angetrieben sein. In diesem Fall ist die Kühlung proportional zur Drehzahl des Motors.

Bei einer bevorzugten Ausführungsform der Erfindung ist die Motorwicklung von einem Reif eingefasst, welcher durch die Abstandhalter am Gehäuse abgestützt ist. Der Reif bildet dann einen Stator, der der Motorwicklung die erforderliche Stabilität verleiht.

Die Pumpe des Hydraulikaggregates ist eine Verdrängerpumpe oder volumetrische Pumpe. Hierfür eignen sich beispielsweise Zahnradpumpen oder Mehrfach-Kolbenpumpen. Diese liefern eine Fördermenge an Hydrauliköl, welche der Betriebsfrequenz des Motors proportional ist.

Das erfindungsgemäße Hydraulikaggregat eignet sich insbesondere für die Einpumpentechnik, bei der nur eine einzige gesteuerte Pumpeneinheit den gesamten Bereich, in dem der Volumenstrom verändert wird, abdeckt und auch den gesamten Druckbereich, der vom Lastwiderstand abhängt, abdeckt. Insbesondere eignet sich das Hydraulikaggregat zum Betrieb von Kraftschraubern und ähnlichen hydraulischen Verbrauchern mit stark schwankendem Lastwiderstand.

Im Folgenden wird unter Bezugnahme auf die Zeichnungen ein Ausführungsbeispiel der Erfindung näher erläutert.

Es zeigen:
- Figur 1: eine schematische perspektivische Darstellung eines Ausführungsbeispiels des Hydraulikaggregats in aufgeschnittenem Zustand, und
- Figur 2: eine perspektivische Gesamtansicht des Hydraulikaggregates.

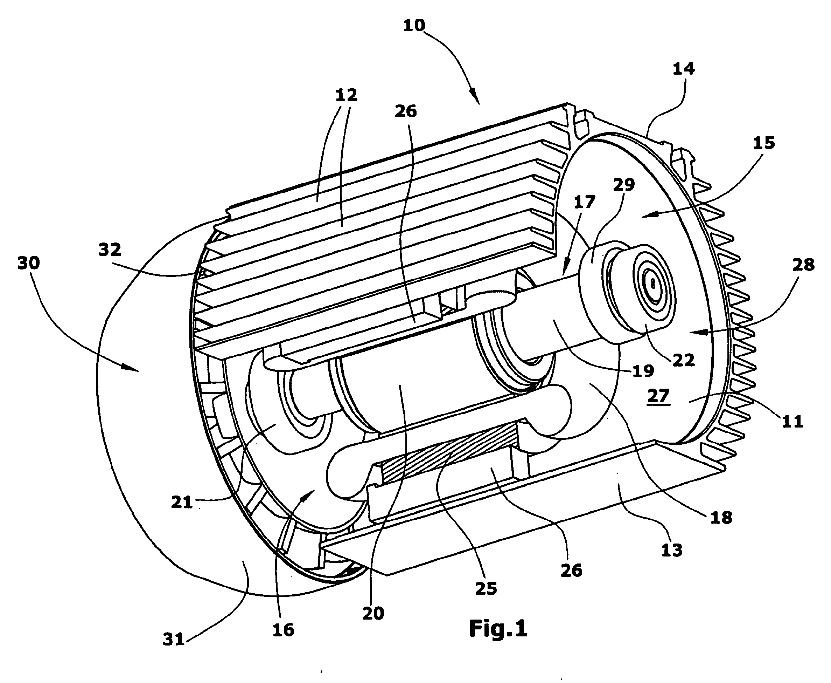

Das Hydraulikaggregat weist gemäß Figur 1 ein Gehäuse 10 auf, bei dem es sich um ein übliches Motorgehäuse eines Elektromotors handelt. Das Gehäuse 10 hat eine zylindrische Innenwand 11 und weist an seiner Außenseite zahlreiche längs verlaufende Rippen 12 auf, welche Kühlrippen bilden. Das Gehäuse 10 bildet einen Profilkörper aus einem Strangpressprofil. Es ist an einer Stelle seines Umfangs mit einer angeformten längslaufenden Montageplatte 13 versehen und an der diametral gegenüberliegenden Seite befindet sich ein Befestigungsprofil 14 zur Anbringung von Komponenten an dem Gehäuse.

Das Gehäuse 10 enthält den Elektromotor 15. Dieser besteht aus einem Stator 16 und einem Rotor 17. Der Motor ist ein permanentmagnet-erregter Synchronmotor, dessen Stator eine drehfelderzeugende Statorwicklung 18 aufweist. Der Rotor 17 besteht aus der Motorwelle 19 und daran befestigten Permanentmagneten 20. Die Motorwelle 19 ist in Lagern 21, 22 in den (nicht dargestellten) Stirnwänden des Gehäuses 10 gelagert.

Die Statorwicklung 18 ist mit einem Reif 25 eingefasst, der einen geschlossenen Ring bildet und die Spulenwicklung umgibt. An der zylindrischen Innenwand 11 des Gehäuses 10 sind Abstandhalter 26 befestigt, welche radial nach innen abstehen und den Reif 25 im Gehäuse zentriert halten. Auf diese Weise wird der Stator 16 im Gehäuse zentriert. Die Abstandhalter 26 sind Leisten, die in Längsrichtung des Gehäuses verlaufen. Mindestens sind drei derartiger Leisten vorgesehen, bei dem vorliegenden Ausführungsbeispiel jedoch 4. Die Abstandhalter 26 sind kürzer als die axiale Länge des Raumes 27, so dass sie die Zirkulation des Hydrauliköls in dem Raum 27 nicht behindern.

Durch die Abstandhalter 26 wird erreicht, dass zwischen dem Stator 16 und der Innenfläche 11 des Gehäuses der ringförmige Raum 27 vorhanden ist, der den Hauptteil des Volumens eines Reservoirs 28 bildet. Das Reservoir wird durch das Gehäuse 10 begrenzt. Der Stator 16 und der Rotor 17 befinden sich eingetaucht in der Hydraulikflüssigkeit.

Die Motorwelle 19 weist einen Exzenterring 29 auf, der eine (nicht dargestellte) Pumpe antreibt. Der Saugeinlass der Pumpe ist über eine Hydraulikleitung mit dem Reservoir 28 verbunden. Die Pumpe ist eine Mehrfach-Kolbenpumpe aus mehreren Einzelpumpen, die sternförmig um die Motorwelle 19 herum angeordnet sind, und deren Kolben von dem Exzenterring 29, der exzentrisch mit der Motorwelle fest verbunden ist, angetrieben werden. Jede der Einzelpumpen saugt über ein Rückschlagventil Öl aus dem Reservoir an und fördert es über ein weiteres Rückschlagventil zum Pumpenauslass. Die Mehrfach-Kolbenpumpe ist eine volumetrische Pumpe.

An dem der Pumpe gegenüberliegenden Ende des Gehäuses 10 befindet sich ein Lüfter 30, der ein Gehäuse 31 aufweist, welches radial über das Gehäuse 10 übersteht. In dem Gehäuse 31 rotiert ein Lüfterrad, welches einen Luftstrom 32 entlang der Rippen 12 erzeugt. Das Lüfterrad ist mit der Motorwelle 19 verbunden und wird durch diese angetrieben. Wegen der effektiven Wärmeabfuhr ergibt sich eine gute Kühlung. Infolge der geringen Erwärmung des Hydraulikaggregats erhöht sich auch der Wirkungsgrad. Wegen des Verzichts auf ein separates Motorgehäuse ist das Hydraulikaggregat von kompakter Bauform und von geringem Gewicht.

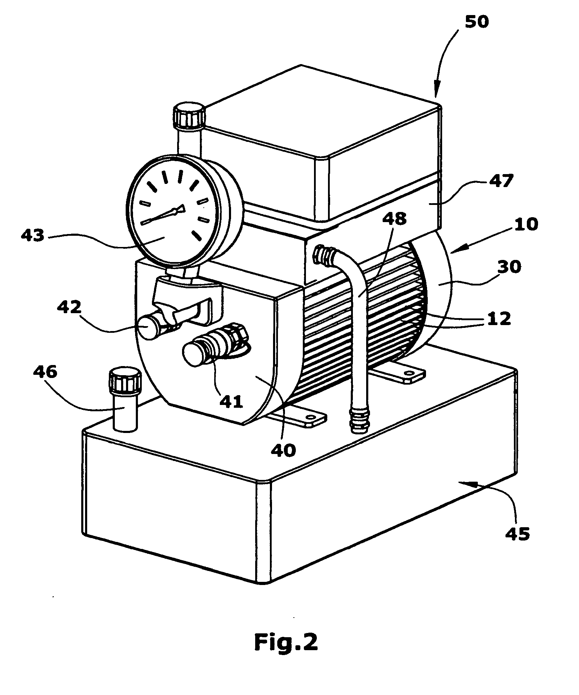

In Figur 2 ist das gesamte Hydraulikaggregat dargestellt. Man erkennt das Gehäuse 10 mit den längslaufenden Rippen 12. An dem einen Ende befindet sich der Lüfter 30, der einen Luftstrom an der Außenseite des Gehäuses entlang treibt. An dem gegenüberliegenden Ende des Gehäuses befindet sich der Pumpenteil 40 mit dem Druckanschluss 41 und dem Rücklaufanschluss 42 an der Stirnseite. Ferner ist dort ein Manometer 43 angebracht, welches den Druck anzeigt.

Auf einem Hilfsreservoir 47 befindet sich in einem Gehäuse die Motorsteuerung 50. Diese ist mit (nicht dargestellten) elektrischen Leitungen mit dem Elektromotor 15 verbunden.

Der Druck am Druckanschluss 41 wird durch einen (nicht dargestellten) Drucksensor ermittelt. Dieser Druck ist ein Maß für die Last des angeschlossenen Verbrauchers. In Abhängigkeit von dem Druckwert steuert die Motorsteuerung 50 den Elektromotor 15 in der Weise, dass bei höherem Druck die Drehzahl des Motors verringert wird. Sobald sich der Druck verringert, erhöht sich wiederum die Motordrehzahl. Auf diese Weise wird erreicht, dass die vom Motor aufgenommene Leistung im Wesentlichen Konstant bleibt und weitgehend unabhängig von dem jeweiligen Lastzustand des Verbrauchers ist.

## Patentansprüche

1. Hydraulikaggregat zur Lieferung von Öl an einen eine hydraulische Last erzeugenden Kraftschrauber, mit einem Öl enthaltenden Reservoir (28), einer Pumpe und einem die Pumpe treibenden elektrischen Motor (15), der ein Gehäuse (10) aufweist,
wobei der Motor (15) ein mit variabler Betriebsfrequenz betriebener Synchronmotor ist und eine Motorsteuerung (50) vorgesehen ist, die die Betriebsfrequenz in Abhängigkeit von der vom Verbraucher erzeugten Last derart verändert, dass mit zunehmender Last die Betriebsfrequenz kleiner wird,
**dadurch gekennzeichnet,**
**dass** das Gehäuse (10) des Motors (15) zugleich mindestens einen Teil des Reservoirs (28) bildet, wobei der Motor (15) von Öl umspült ist, und dass das Gehäuse (10) an seiner Unterseite eine angeformte von Rippen (12) freie Montageplatte (13) aufweist und an seiner Oberseite ein Befestigungsprofil (14) für die Motorsteuerung.

2. Hydraulikaggregat nach Anspruch 1, **dadurch gekennzeichnet, dass** die Regelung des Motors derart erfolgt, dass die von dem Motor (15) erzeugte Leistung unabhängig von der Größe der Last im Wesentlichen konstant ist.

3. Hydraulikaggregat nach Anspruch 1 oder 2, **dadurch gekennzeichnet, dass** zur Ermittlung der Last ein Drucksensor vorgesehen ist, der den Ausgangsdruck des Hydraulikaggregates misst.

4. Hydraulikaggregat nach Anspruch 1 oder 2, **dadurch gekennzeichnet, dass** zur Ermittlung der Last ein Stromsensor vorgesehen ist, der die Stromaufnahme des Motors (15) misst.

5. Hydraulikaggregat nach einem der Ansprüche 1 bis 4, **dadurch gekennzeichnet, dass** in dem Gehäuse (10) Abstandhalter (26) zur Positionierung der Statorwicklung (18) des Motors mit radialem Abstand zu dem Gehäuse (10) vorgesehen sind, derart, dass zwischen Statorwicklung (18) und Gehäuse (10) ein zu dem Reservoir (28) gehörender Raum (27) gebildet ist.

6. Hydraulikaggregat nach Anspruch 5, **dadurch gekennzeichnet, dass** die Statorwicklung (18) von einem Reif (25) eingefasst ist, welcher durch die Abstandhalter (26) am Gehäuse (10) abgestützt ist.

7. Hydraulikaggregat nach Anspruch 5, **dadurch gekennzeichnet, dass** der Raum (27) sich über die gesamte Länge des Gehäuses (10) erstreckt.

8. Hydraulikaggregat nach einem der Ansprüche 1 bis 7, **dadurch gekennzeichnet, dass** das Gehäuse (10) an seiner Außenseite Rippen (12) aufweist, die in Achsrichtung des Motors (15) verlaufen, und dass an einem Ende des Gehäuses ein Lüfter (30) vorgesehen ist, der radial über das Gehäuse vorsteht und einen Kühlluftstrom (32) entlang der Rippen (12) erzeugt.

## Claims

1. Hydraulic aggregate for supplying oil to a power wrench generating a hydraulic load, comprising a reservoir (28) containing oil, a pump and an electric motor (15) driving the pump, the motor comprising a housing (10),
wherein the motor (15) is a synchronous motor driven at a variable operating frequency and a motor control (50) is provided that changes the operating frequency as a function of the load generated by the ballast, such that the operating frequency decreases as the load increases,
**characterized in**
**that** the housing (10) of the motor (15) simultaneously forms at least a part of the reservoir (28), the motor (15) being flown around by oil, and that the housing (10) has its lower side provided with a mounting plate (13) free of ribs (12) and has its upper side provided with a fastening profile (14) for the motor control.

2. Hydraulic aggregate of claim 1, **characterized in that** the motor is controlled such that the power generated by the motor (15) is substantially constant, independent of the magnitude of the load.

3. Hydraulic aggregate of claim 1 or 2, **characterized in that** a pressure sensor is provided for the determination of the load, said sensor measuring the outlet pressure of the hydraulic aggregate.

4. Hydraulic aggregate of claim 1 or 2, **characterized in that** a current sensor is provided for the determination of the load, said sensor measuring the current consumption of the motor (15).

5. Hydraulic aggregate of one of claims 1 to 4, **characterized in that** spacers (26) are provided in the housing (10) to position the stator coil (18) of the motor with a radial distance to the housing (10), such that a space (27) forming part of the reservoir (28) is formed between the stator coil (18) and the housing (10).

6. Hydraulic aggregate of claim 5, **characterized in that** the stator coil (18) is surrounded by a collar (25) supported at the housing (10) by the spacers (26).

7. Hydraulic aggregate of claim 5, **characterized in that** the space (27) extends over the entire length of the housing (10).

8. Hydraulic aggregate of one of claims 1 to 7, **characterized in that** the housing (10) has ribs (12) on its outer side that extend in the axial direction of the motor (15), and that a blower (30) is provided at one end of the housing (10), which projects radially beyond the housing and generates a cooling air flow (32) along the ribs (12).

## Revendications

1. Groupe hydraulique pour la fourniture d'huile à une visseuse mécanique produisant une charge hydraulique, avec un réservoir (28) contenant de l'huile, une pompe et un moteur (15) électrique qui entraîne la pompe et présente un carter (10),
le moteur (15) étant un moteur synchrone entraîné avec une fréquence de fonctionnement variable, et une commande de moteur (50) étant prévue qui modifie la fréquence de fonctionnement en fonction de la charge produite par le consommateur de sorte que la fréquence de fonctionnement diminue quand la charge augmente, **caractérisé en ce que**
le carter (10) du moteur (15) forme en même temps au moins une partie du réservoir (28), le moteur (15) étant baigné d'huile, et **en ce que**, sur son côté inférieur, le carter (10) présente une plaque de montage (13) formée libre de nervures (12) et, sur son côté supérieur, un profilé de fixation (14) pour la commande de moteur.

2. Groupe hydraulique selon la revendication 1, **caractérisé en ce que** la régulation du moteur est effectuée de sorte que la puissance produite par le moteur (15) est essentiellement constante indépendamment de la grandeur de la charge.

3. Groupe hydraulique selon la revendication 1 ou 2, **caractérisé en ce que**, pour déterminer la charge, il est prévu un capteur de pression qui mesure la pression de sortie du groupe hydraulique.

4. Groupe hydraulique selon la revendication 1 ou 2, **caractérisé en ce que**, pour déterminer la charge, il est prévu un capteur de courant qui mesure la l'absorption de courant du moteur (15).

5. Groupe hydraulique selon une des revendications 1 à 4, **caractérisé en ce que**, dans le carter (10), il est prévu des entretoises (26) pour le positionnement de l'enroulement du stator (18) du moteur avec une distance radiale au carter (10), de sorte que, entre l'enroulement du stator (18) et le carter (10), il est formé un espace (27) appartenant au réservoir (28).

6. Groupe hydraulique selon la revendication 5, **caractérisé en ce que** l'enroulement du stator (18) est enserré dans une virole (25) qui est en appui sur le carter (10) sous l'action des entretoises (26).

7. Groupe hydraulique selon la revendication 5, **caractérisé en ce que** l'espace (27) s'étend sur toute la longueur du carter (10).

8. Groupe hydraulique selon une des revendications 1 à 7, **caractérisé en ce que** le carter (10) présente, sur son côté extérieur, des nervures (12) qui sont placées dans la direction axiale du moteur (15), et **en ce que**, à une extrémité du carter, il est prévu un ventilateur (30) qui fait saillie de façon radiale au-dessus du carter et qui produit un flux d'air de refroidissement (32) le long des nervures (12).
